(19) Europäisches Patentamt
European Patent Office
Office européen des brevets

(11) **EP 3 237 877 B1**

(12) **EUROPÄISCHE PATENTSCHRIFT**

(45) Veröffentlichungstag und Bekanntmachung des Hinweises auf die Patenterteilung:
**10.07.2019   Patentblatt 2019/28**

(21) Anmeldenummer: **15766175.2**

(22) Anmeldetag: **21.09.2015**

(51) Int Cl.:
*G01N 3/04* (2006.01)          *G01N 3/08* (2006.01)
*G01N 3/20* (2006.01)

(86) Internationale Anmeldenummer:
**PCT/EP2015/071586**

(87) Internationale Veröffentlichungsnummer:
**WO 2016/102084 (30.06.2016 Gazette 2016/26)**

(54) **VORRICHTUNG ZUR DURCHFÜHRUNG EINES BIEGEVERSUCHS**

DEVICE FOR CARRYING OUT A BENDING TEST

DISPOSITIF PERMETTANT D'EFFECTUER UN ESSAI DE FLEXION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014   DE 102014119485**

(43) Veröffentlichungstag der Anmeldung:
**01.11.2017   Patentblatt 2017/44**

(73) Patentinhaber: **Hydro Aluminium Rolled Products GmbH**
**41515 Grevenbroich (DE)**

(72) Erfinder:
• **AEGERTER, Johannes**
**53773 Hennef (DE)**
• **KELLER, Stefan**
**53125 Bonn (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**CN-A- 103 969 118          DE-A1- 3 101 422**
**FR-A1- 2 735 235          JP-A- S60 168 037**
**JP-A- 2009 008 665**

EP 3 237 877 B1

**Beschreibung**

Die Erfindung betrifft eine Vorrichtung zur Durchführung eines Biegeversuchs mit einer Grundplatte, mit über die Grundplatte verbundenen Widerlagern, mit Lagerblöcken, welche jeweils ein Auflager zum Auflegen einer Biegeprobe aufweisen und mit einem Biegestempel oder Biegeschwert zur Ausübung einer Kraft auf eine Biegeprobe. Weiter betrifft die Erfindung ein Verfahren zur Durchführung eines Biegeversuchs unter Verwendung einer erfindungsgemäßen Vorrichtung.

Aus dem Stand der Technik sind Biegeversuche als Standardverfahren in der Charakterisierung von mechanischen Materialeigenschaften bekannt. Bei Biegeversuchen wird üblicherweise eine Biegeprobe auf einer Halterung angeordnet und ggf. eingespannt. Anschließend wird die Biegeprobe einer mechanischen Belastung unterworfen, beispielsweise einer kontinuierlich gesteigerten Kraft entlang einer bestimmten Richtung oder einer in der Richtung wechselnden Kraft. Über die Messung einer durch die Kraft verursachten Verformung, insbesondere eines Biegewinkels oder auch eines Bruchwinkels können mechanische Kennwerte des Materials der Probe direkt gemessen bzw. errechnet werden.

Nützliche Varianten des Biegeversuchs sind dabei der sogenannte 3-Punkt-Biegeversuch, insbesondere als Plättchen-Biegeversuch oder der 4-Punkt-Biegeversuch. Die Biegeprobe wird hierbei auf zwei Auflager aufgelegt (die ersten zwei Punkte). Mit einem Biegestempel oder Biegeschwert wird eine Kraft zwischen den Auflagern auf die Biegeprobe ausgeübt, entweder mit einem Biegestempel oder Biegeschwert mit einem Berührungspunkt (im 3-Punkt-Biegeversuch) oder mit einem Biegestempel oder Biegeschwert mit zwei Berührungspunkten (im 4-Punkt-Biegeversuch). Durch die von dem Biegestempel oder Biegeschwert ausgeübte Kraft wird die Probe zwischen den Auflagern verformt, beispielsweise im 3-Punkt-Biegeversuch im Wesentlichen in eine V-Form mit einem bestimmten Öffnungswinkel bzw. Biegewinkel. Beispielsweise wird dabei eine Kennlinie aufgenommen, bei der die Kraft über den Stempelweg gemessen und ausgewertet wird.

In solchen Biegeversuchen ist das Messergebnis abhängig vom Abstand der Auflager. Problematisch hierbei ist, dass sich die auf die Auflager ausgeübten Kräfte mit zunehmendem Biegewinkel sehr stark erhöhen, so dass sich der Abstand der Auflager während eines Biegeversuchs mit dem Biegewinkel durch ein Nachgeben der Messvorrichtung ändern kann und damit die Messwerte verfälscht werden. Der Abstand der Widerlager sollte somit möglichst auch unter hohen Kräften konstant gehalten werden, um genauere Messergebnisse zu erhalten.

Gleichzeitig ist es aber oft wünschenswert, dass der Abstand der Auflager einstellbar ist. Dabei werden insbesondere verschiedene Abstände der Auflager für verschiedene Probengeometrien und/oder Biegestempelgeometrien verwendet. Auch innerhalb einer Messreihe für eine Probengeometrie können verschiedene Abstände verwendet werden.

Die DE 31 01422 A1 beschreibt eine Vorrichtung zur Durchführung eines Biegeversuchs mit an Lagerböcken befindlichen Auflagern, wobei die Lagerböcke auf einer Grundplatte verstellbar angeordnet sind. Die Lagerböcke sind dabei in einer Nut auf der Grundplatte gefasst und über eine Gewindewelle gegeneinander verschiebbar. Damit kann über eine Positionierung der Lagerböcke der Abstand der Auflager eingestellt werden.

Nachteilig hieran ist jedoch einerseits, dass die Fixierung der Lagerböcke gegeneinander über die Gewindewelle erstens einem gewissen Spiel ausgesetzt sein kann, welches eine Gewindeverbindung mit sich bringt. Andererseits wird die Gewindewelle bei einem Biegeversuch ebenfalls über eine Biegekraft mit der Höhe der Lagerböcke als Hebel belastet, was bei höheren Kräften in einer Änderung des Abstands der Auflager resultiert.

Die FR2735235 A1 beschreibt eine Vorrichtung zur Durchführung eines Biegeversuchs, mit einer Grundplatte , mit über die Grundplatte verbundenen Widerlagern, mit Lagerblöcken, welche jeweils ein Auflager zum Auflegen einer Biegeprobe aufweisen und mit einem Biegestempel oder einem Biegeschwert zur Ausübung einer Kraft auf eine Biegeprobe. Der Abstand der Auflager ist dabei nicht einstellbar.

Bisher musste somit ein Kompromiss zwischen einer präzisen Einstellbarkeit des Abstands der Auflager und einer hohen Kraftbeständigkeit des Abstands der Auflager bzw. einer hohen Rigidität der Messvorrichtung gemacht werden.

Ausgehend vom Stand der Technik liegt der vorliegenden Erfindung damit das technische Problem zugrunde, eine Vorrichtung und ein Verfahren zur Durchführung eines Biegeversuchs anzugeben, mit welchen die Nachteile aus dem Stand der Technik vermieden werden und insbesondere der Abstand der Auflager präzise und kraftbeständig eingestellt werden kann.

Gemäß einer ersten technischen Lehre der vorliegenden Erfindung wird dieses technische Problem betreffend eine Vorrichtung dadurch gelöst, dass die Widerlager und die Lagerblöcke über zur Grundplatte geneigte Kontaktflächen aneinander anliegen.

Die erfindungsgemäße Vorrichtung umfasst Widerlager, welche über eine Grundplatte verbunden sind und die bei dem Biegeversuch entstehenden Kräfte auf die Vorrichtung aufnehmen können. Dabei können die Abmessungen und das Material der Widerlager und der Grundplatte entsprechend den Belastungen bei dem Biegeversuch ausgestaltet werden. Die Einheit der Grundplatte mit den Widerlagern ist rigide und insbesondere nicht verstellbar gestaltet.

Die Auflager zur Auflage einer Biegeprobe sind an Lagerblöcken angeordnet. Die Lagerblöcke dienen zur Übertragung der Biegekräfte von den Auflagern zu den Widerlagern bei einem Biegeversuch. Die Lagerblöcke werden hierzu in die Vorrichtung zwischen die Widerlager eingesetzt.

Erfindungsgemäß liegen die Widerlager und die Lagerblöcke über zur Grundplatte geneigte Kontaktflächen aneinander an. Über diese Kontaktflächen kann die Kraftübertragung von den Lagerblöcken zu den Widerlagern bewirkt werden.

Dadurch, dass die Kontaktflächen geneigt ausgestaltet sind, werden die bei dem Biegeversuch auf die Biegevorrichtung wirkenden Kräfte besser abgefangen. Insbesondere ist die Neigung der Kontaktflächen so ausgestaltet, dass während des Biegeversuchs stets ein Großteil der übertragenen Kräfte senkrecht auf die Kontaktflächen wirkt. Dabei können die geneigten Kontaktflächen der Widerlager einen Winkel von weniger als 90°, insbesondere zwischen 70° und 90°, bevorzugt zwischen 75° und 85° zu der Grundplatte bilden, wobei der Winkel von der Grundplatte bis zur Kontaktfläche innerhalb des Widerlagers gemessen wird. Die Kontaktflächen der Widerlager zueinander können dabei einen geöffneten Winkel bilden, näherungsweise in einer V-Form mit der Grundplatte als Grundfläche.

Denkbar ist es, eine Änderung des Abstands der Lagerblöcke und damit des Abstands der Auflager über das Einsetzen verschieden dimensionierter Lagerblöcke einzustellen. In einer bevorzugten Ausgestaltung der erfindungsgemäßen Vorrichtung sind jedoch Mittel zur Positionsänderung der Lagerblöcke senkrecht und/oder parallel zur Grundplatte vorgesehen. Aufgrund der geneigten Kontaktflächen von Widerlagern und Lagerblöcken kann mit einer Positionsänderung der Lagerblöcke parallel und/oder senkrecht zur Grundplatte eine Änderung des Abstands der Auflager bewirkt werden. Verändert man die Position der Lagerblöcke senkrecht zur Grundplatte, so wird über die geneigten Kontaktflächen indirekt auch eine Änderung der Position der Lagerblöcke parallel zur Grundplatte und damit des Abstands der Auflager bewirkt. Vorteilhafterweise weist die Vorrichtung bei einer Veränderung des Abstands der Auflager weiterhin die gleiche Stabilität und Rigidität auf, da die Kräfte über die Kontaktflächen zwischen Lagerblöcken und Widerlager auf gleiche Weise übertragen werden können. Eine Änderung der Position der Lagerblöcke parallel zur Grundplatte bewirkt eine direkte Änderung des Abstandes der Auflager. Auch eine Positionsänderung der Auflager lediglich parallel zur Grundplatte kann unter Verwendung der geneigten Kontaktfläche gemäß einer Ausgestaltung erreicht werden. Der Vorteil besteht darin, dass die Höhe der Probe relativ zum Biegestempel in diesem Fall nicht geändert wird.

Durch eine Wahl des Winkels der geneigten Kontaktflächen nahe 90° kann zudem eine sehr feine Einstellung des Abstands der Widerlager ermöglicht werden, ohne dass eine weniger stabile Mechanik in Form eines Feingewindes oder ähnlichem verwendet werden muss. Der Winkel der geneigten Kontaktflächen gibt hierbei über eine Tangensfunktion das Übersetzungsverhältnis von der Positionsänderung senkrecht zur Grundplatte zur Positionsänderung parallel zur Grundplatte vor. Hier ist ein Winkel von Kontaktfläche zu Grundplatte zwischen 70° und 90°, insbesondere zwischen 75° und 85° bevorzugt. Ein Winkel von 80,54° ergibt beispielsweise eine Übersetzung von etwa 4:1 zwischen der Positionierung der Lagerblöcke senkrecht und parallel zur Grundplatte. Bevorzugt sind die Grundplatte und die Widerlager, insbesondere die Winkel von Kontaktfläche zu Grundplatte symmetrisch aufgebaut, d.h. die Anordnung von Grundplatte und Widerlagern hat eine spiegelsymmetrische Ebene und die Winkel der Kontaktflächen der Widerlager sind gegenüberliegend gleich. Diese Art der Ausgestaltung bewirkt, dass nach einmaliger Ausrichtung der Vorrichtung und mittiger Positionierung von Biegestempel oder Biegeschwert auch bei Änderung des Auflagerabstandes der Biegestempel oder das Biegeschwert weiter mittig zu den Auflagern ausgerichtet ist.

In einer weiteren Ausgestaltung der erfindungsgemäßen Vorrichtung ist zwischen den Widerlagern ein Stempel vorgesehen, auf welchem die Lagerblöcke aufliegen. Der Stempel ist so angeordnet, dass die Lagerblöcke unter Verwendung des Stempels senkrecht zur Grundplatte in ihrer Position geändert werden können. Durch die Verwendung eines Stempels kann die Positionierung der Lagerblöcke senkrecht zur Grundplatte präzise eingestellt werden. Dabei kann ein Stempel vorgesehen sein, welcher eine Grundfläche zur Auflage auf der Grundplatte und eine zumindest teilweise dazu parallele Flächen zur Auflage der Lagerblöcke aufweist. Damit kann die Positionierung der Lagerblöcke senkrecht zur Grundplatte auch über ein Einbringen oder ein Entnehmen des Stempels eingestellt werden.

In einer weiteren Ausgestaltung des Stempels weist der Stempel zwei gegen eine Grundfläche geneigte Stützflächen auf und es sind an die Stützflächen angepasste Grundflächen an den Lagerblöcken vorgesehen. Über die zur Grundfläche geneigten Stützflächen und die entsprechend angepassten Lagerblöcke kann durch das Gewicht der Lagerblöcke eine Rückstellkraft auf die Lagerblöcke ausgeübt werden, welche zumindest teilweise senkrecht zur Kontaktfläche der Lagerblöcke wirkt. Damit werden die Lagerblöcke über die Kontaktflächen an den Widerlagern gehalten.

In einer weiteren Ausgestaltung der erfindungsgemäßen Vorrichtung sind als Mittel zur senkrechten Positionsänderung der Lagerblöcke zur Grundplatte wechselbare Einschübe vorgesehen, welche zwischen der Grundplatte und den Lagerblöcken angeordnet werden können. Die wechselbaren Einschübe weisen bevorzugt zwei zumindest teilweise parallele Flächen auf, so dass über die Einschübe eine wohldefinierte Parallelversetzung der Lagerblöcke über die Dicke der Einschübe bewirkt werden kann. Insbesondere können Einschübe zwischen Stempel und Grundplatte und/oder zwischen Stempel und Lagerblöcken angeordnet werden. Je nach den Winkelverhältnissen und Positionierung der Einschübe resultieren dann verschiedene Änderungen des Abstands der Widerlager.

Insbesondere steht eine Vielzahl von Einschüben zur Verfügung, insbesondere auch mit verschiedenen Abmessungen, damit die Positionsänderung der Lagerblöcke senkrecht zur Grundplatte bzw. der Abstand der Auflager präzise und flexibel eingestellt werden kann. Bevorzugt werden die Einschübe durch blechförmige Lagen gebildet.

In einer weiteren Ausgestaltung der erfindungsmäßigen Vorrichtung ist als Mittel zur senkrechten Positionsänderung der Lagerblöcke zur Grundplatte eine Spindel vorgesehen, welche zwischen der Grundplatte und den Lagerblöcken, insbesondere zwischen Stempel und Grundplatte und/oder zwischen Stempel und Lagerblöcken angeordnet ist. Mit einer Spindel, welche beispielsweise ein Außengewinde aufweist und in einem entsprechenden Gewinde in der Grundplatte, einem Stempel oder in den Lagerblöcken angeordnet ist, kann die Position der Lagerblöcke senkrecht zur Grundplatte stufenlos eingestellt werden. Insbesondere ist die Spindel näherungsweise senkrecht zur Verbindungslinie der Auflager ausgerichtet und insbesondere näherungsweise senkrecht zur Grundplatte. Mit näherungsweise senkrecht ist hierbei ein Winkel von 90 ± 10° gemeint. Damit wirken während eines Biegeversuchs nur geringe seitliche Kräfte auf die Spindel und eine ausreichende Rigidität der Vorrichtung ist gewährleistet.

Gemäß einer weiteren Ausgestaltung der Vorrichtung weist jedes Widerlager einen mit der Grundplatte verbundenen Teil und mindestens eine Stützplatte auf, wobei die Stützplatte die geneigte Kontaktfläche zum jeweiligen Lagerblock bereitstellt. Der mit der Grundplatte verbundene Teil des Widerlagers dient zur Ableitung der Kräfte während des Biegeversuchs in die Grundplatte und gewährleistet damit eine sehr hohe Genauigkeit der Messung. Anders als bei den zuvor beschriebenen Varianten kann durch den Austausch der Stützplatten die Position der Auflager lediglich parallel zur Grundplatte auf einfache Weise verändert werden. Die Stützplatten können hierzu unterschiedliche Dicken aufweisen, welche gleichzeitig dann verschiedene Abstände der Auflager bzw. Lagerblöcke bereitstellen.

Sind gemäß einer nächsten Ausgestaltung der Vorrichtung Mittel zur Positionsänderung der Stützplatten senkrecht zur Grundplatte vorgesehen, kann über die geneigte Kontaktfläche der Stützplatte die Position der Auflager und damit der Lagerblöcke lediglich in horizontaler Richtung geändert werden, ohne dass die Höhe der Auflager verändert wird. Vorzugsweise weisen hierzu die Stützplatten eine keilförmige Querschnittsfläche auf.

Als Mittel zur Positionsänderung der Stützplatten senkrecht zur Grundplatte können gemäß einer weiteren Ausgestaltung mindestens eine Spindel, mindestens ein Einschub und/oder mindestens ein Stempel vorgesehen sein. Spindeln, Stempel und Einschübe können zur direkten Positionsänderung der Stützplatten senkrecht zur Grundplatte herangezogen werden. Auch eine gleichzeitige Positionsänderung der Lagerblöcke senkrecht und parallel zur Grundplatte ist bei Verwendung von Stempeln, Spindeln und Einschüben möglich.

Weiter verbessert werden kann die erfindungsgemäße Vorrichtung dadurch, dass als Mittel zur Positionsänderung der Stützplatten senkrecht zur Grundplatte mindestens ein horizontal verschiebbares Keilelement vorgesehen ist, welches mit einem eine geneigte Kontaktfläche zum Keilelement aufweisenden Schubelement im Eingriff steht, so dass durch Verschieben des mindestens einen Keilelementes die Position des Schubelementes senkrecht zur Grundplatte geändert werden kann, wobei das mindestens eine Schubelement im Eingriff mit den Stützplatten steht, derart dass bei einer Positionsänderung des Schubelements die Position der Stützplatten senkrecht zur Grundplatte veränderbar ist. Über das Keilelement und das Schubelement kann eine sehr präzise Veränderung der Position der Stützplatten durch eine Untersetzung bezüglich der Positionsverschiebung des Keilelements und der Übertragung dessen Bewegung auf eine Positionsänderung des Schubelements senkrecht zur Grundplatte genutzt werden. Die hoch präzise Positionsänderung der Stützplatten senkrecht zur Grundplatte führt über die geneigten Kontaktflächen direkt zur hoch präzisen Verschiebung der Lagerblöcke parallel zur Grundplatte.

Eine besonders einfache und zugleich sehr präzise Möglichkeit das mindestens eine Keilelement horizontal zu verschieben, wird gemäß einer weiteren Ausgestaltung dadurch erreicht, dass eine Spindel zur horizontalen Verschiebung des Keilelementes vorgesehen ist. Über die Spindel kann ein Untersetzungsverhältnis bezüglich einer Rotation der Spindel im Verhältnis zur Bewegung des Keilelementes derart gewählt werden, dass die Verschiebung der Lagerblöcke sehr präzise erfolgt. Da die Stützplatten aufgrund der geneigten Kontaktfläche nur einen kleinen Teil der auftretenden Biegekräfte auf das Schubelement ableiten, werden auch auf die Spindel keine hohen Kräfte während des Biegeversuchs übertragen. Durch die Verwendung einer Spindel und eines Untersetzungsverhältnisses kann die Position der Spindel und damit der Abstand der Lagerblöcke zueinander auf einfache Weise fest arretiert in eine feste Beziehung gesetzt werden. Vorteilhaft kann diese Ausgestaltung daher dadurch weiter verbessert werden, in dem eine Ablesevorrichtung an der Spindel vorgesehen ist, um den Abstand der Auflager direkt an der Spindel ablesen zu können. Die beschriebenen Ausgestaltungen können dadurch weiter verbessert werden, dass Schrittmotoren vorgesehen sind, welche die Positionierung der Lagerblöcke exakt und reproduzierbar, beispielsweise über angetriebene Spindeln vornehmen. Beispielsweise kann die Spindel über Schrittmotoren angetrieben werden. Hierdurch besteht insbesondere die Möglichkeit, die Biegeversuche automatisiert durchzuführen.

In einer weiteren Ausgestaltung der erfindungsgemäßen Vorrichtung ist ein Vorspannungselement, insbesondere ein Federelement zwischen den Lagerblöcken vorgesehen. Ein solches Vorspannungselement, beispielsweise ein Federelement oder ein Element aus einem elastischen Material, übt eine Rückstellkraft auf die Lagerblöcke aus, welche zumindest teilweise senkrecht zur Kontaktfläche der Lagerblöcke wirkt. Damit werden die Lagerblöcke über die Kontaktflächen an den Widerlagern gehalten.

In einer weiteren Ausgestaltung der erfindungsgemäßen Vorrichtung sind Verbindungsmittel vorgesehen, welche die Widerlager zumindest teilweise in Richtung der Verbindungslinie der Auflager verbinden und/oder die Widerlager zumindest teilweise in Richtung der Verbindungslinie der Auflager mit der Grundplatte verbinden. Durch solche Verbindungsmittel kann die Stabilität und Rigidität bzw. Biegesteifigkeit der Anordnung von Widerlagern und Grundplatte weiter verbessert werden, was die Messgenauigkeit insbesondere bei hohen Kräften im Biegeversuch erhöht. Dabei können beispielsweise die Widerlager untereinander über Streben oder Platten abgestützt werden. Ebenso kann die Verbindung von Widerlagern und Grundplatte durch Verbindungsmittel weiter unterstützt sein, beispielsweise in Form von gekreuzten Streben oder einer Platte, welche an Widerlagern und der Grundplatte befestigt ist. Eine Verbindung der Verbindungsmittel mit den Widerlagern und der Grundplatte kann insbesondere formschlüssig über eine Verstiftung oder Verschraubung, aber auch stoffschlüssig über Kleben, Schweißen, oder Löten oder einer Kombination davon bewirkt werden. In einer weiteren Ausgestaltung der erfindungsgemäßen Vorrichtung sind Öffnungen in den Verbindungsmitteln zum Beobachten der Biegeprobe und/oder zum Wechseln des Stempels oder der Einschübe vorgesehen. Durch Öffnungen in den entsprechenden Bereichen kann die Stabilität der Anordnung von Widerlagern und Grundplatte, wie bereits dargelegt, durch die Verbindungsmittel erhöht werden, ohne dass die Benutzerfreundlichkeit der Anordnung beeinträchtigt wird.

In einer weiteren Ausgestaltung der erfindungsgemäßen Vorrichtung sind die Widerlager mit der Grundplatte stoffschlüssig verbunden. Da mit der erfindungsgemäßen Vorrichtung eine Einstellung der Widerlager nicht nötig ist, kann durch eine stoffschlüssige Verbindung die Stabilität der Anordnung von Grundplatte und Widerlagern weiter verbessert werden. Insbesondere können Widerlager und Grundplatte ein einziges Bauteil darstellen, d.h. aus einem Stück gefertigt sein. Widerlager und Grundplatte können aber auch als separate Bauteile hergestellt und anschließend durch eine stoffschlüssige Verbindungsmethode verbunden werden, beispielsweise Schweißen, Kleben oder Löten.

In einer weiteren Ausgestaltung der erfindungsgemäßen Vorrichtung sind als Auflager zylindersegmentförmige Flächen, insbesondere Rollen vorgesehen. Zylindersegmentförmige Flächen haben den Vorteil, dass während des Biegeversuchs trotz eines veränderlichen Biegewinkels eine gleichförmige, insbesondere geradlinige Auflagefläche für die Biegeprobe bereitgestellt wird. Die Auflager können auch eine komplett zylindrische Form aufweisen und insbesondere als Rollen drehbar gelagert sein.

In einer weiteren Ausgestaltung der erfindungsgemäßen Vorrichtung ist der Biegestempel oder Biegeschwert für einen 3-Punkt-Biegeversuch, insbesondere für einen Plättchenbiegeversuch, oder einen 4-Punkt-Biegeversuch ausgelegt. Die erfindungsgemäße Vorrichtung ist insbesondere für die unter Umständen auftretenden hohen Lasten bei 3-Punkt- oder 4-Punkt-Biegeversuchen geeignet. Der Biegestempel oder das Biegeschwert kann weiter ein auswechselbares Profil aufweisen, so dass zwischen 3-Punkt- und 4-Punkt-Biegeversuchen gewechselt oder auch eine verschlissene Kontaktfläche des Biegestempels oder Biegeschwerts ersetzt werden kann.

Gemäß einer zweiten technischen Lehre der vorliegenden Erfindung wird das oben genannte technische Problem betreffend ein Verfahren unter Verwendung einer erfindungsgemäßen Vorrichtung gelöst, bei welchem eine Biegeprobe auf die Auflager gelegt wird und bei welchem eine Kraft zwischen den Auflagern auf die Biegeprobe ausgeübt wird.

Wie zur erfindungsgemäßen Vorrichtung bereits ausgeführt, ist diese besonders zur Aufnahme hoher Kräfte geeignet, ohne dass sich der für das Messergebnis entscheidende Abstand der Auflager wesentlich verändert. Folglich können mit der erfindungsgemäßen Vorrichtung Biegeversuche durchgeführt werden, bei welchen die ausgeübten Kräfte groß sind und insbesondere können hohe Biegewinkel erreicht werden. Bei hohen Biegewinkeln entstehen hohe Kräfte parallel zu der Verbindungslinie der Auflager, welche durch die geneigten Kontaktflächen von Widerlagern und Lagerblöcken in günstiger Weise aufgenommen werden können. Daher kann mit der erfindungsgemäßen Vorrichtung aufgrund eines im Wesentlichen konstanten Abstands der Auflager eine hohe Messgenauigkeit im Biegeversuch erreicht werden.

Insbesondere wird bei dem erfindungsgemäßen Verfahren die Kraft des Biegestempels oder Biegeschwerts und ein durch die Kraft erzeugter Biegewinkel der Biegeprobe gemessen. Damit kann die Kraft-Weg-Kennlinie des Materials der Biegeprobe aufgenommen werden.

Verschiedene Probengeometrien der Biegeprobe sind im erfindungsgemäßen Verfahren denkbar. In einer bevorzugten Ausgestaltung hat die Biegeprobe eine Plättchenform, Bandform oder Blechform. Damit kann die Biegeprobe mit einer Fläche auf die Auflager aufgelegt werden und die Messgeometrie für einen 3-Punkt- oder 4-Punkt-Biegeversuch ist wohldefiniert, d.h. die Auflagepunkte bzw. Ansatzpunkte für die Biegekraft sind auf einfache Weise festgelegt.

Gemäß einer weiteren Ausgestaltung des erfindungsgemäßen Verfahrens wird über Mittel zur Positionsänderung der Lagerblöcke vor dem Auflegen der Biegeprobe der Abstand der Auflager eingestellt. Insbesondere kann damit der Abstand der Auflager an die Probegeometrie angepasst werden. Auch kann eine Messreihe an einer bestimmten Probengeometrie unter Verwendung verschiedener Abstände durchgeführt werden. Mit der erfindungsgemäßen Vorrichtung kann insbesondere der Abstand der Auflager ohne eine nachteilige Auswirkung auf die Stabilität der Vorrichtung in Bezug auf hohe Biegekräfte eingestellt werden, so dass besonders genaue Messergebnisse erzielt werden können.

Bezüglich weiterer Ausgestaltungen und Vorteile des Verfahrens wird auf die obigen Ausführungen zur erfindungsgemäßen Vorrichtung verwiesen sowie auf die Zeichnungen. In der Zeichnung zeigt:

Fig. 1       ein erstes Ausführungsbeispiel der erfindungsgemäßen Vorrichtung in einer schematischen Ansicht,

Fig. 2       ein zweites Ausführungsbeispiel der erfindungsgemäßen Vorrichtung in einer schematischen Seitenansicht,

Fig. 3       ein drittes Ausführungsbeispiel der erfindungsgemäßen Vorrichtung in einer schematischen Ansicht,

Fig. 4       ein viertes Ausführungsbeispiel der erfindungsgemäßen Vorrichtung in einer schematischen Ansicht,

Fig. 5       eine schematische Detailansicht der Auflager während eines Biegeversuchs,

Fig. 6 bis 9       vier weitere Ausführungsbeispiele der erfindungsgemäßen Vorrichtung in einer schematischen Ansicht.

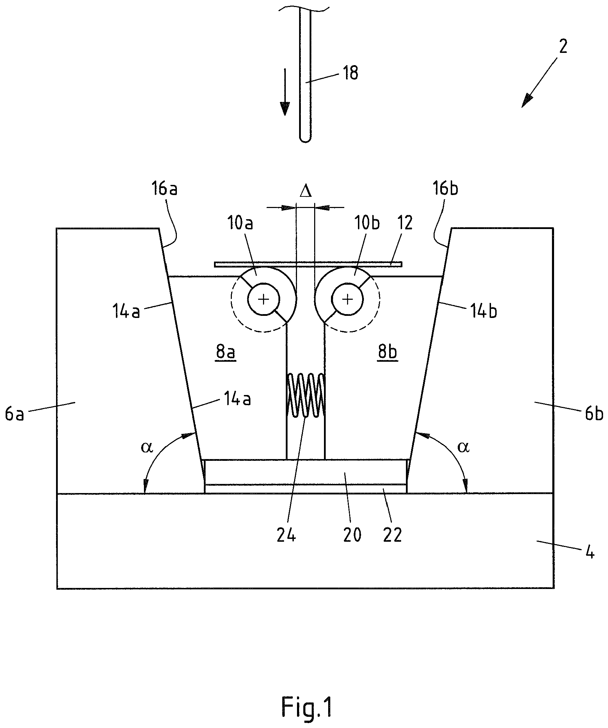

Fig. 1 zeigt ein erstes Ausführungsbeispiel der erfindungsgemäßen Vorrichtung 2 in einer schematischen Ansicht. Über eine Grundplatte 4 sind Widerlager 6a, 6b miteinander verbunden. Die Verbindung zwischen Grundplatte 4 und Widerlagern 6a, 6b kann beispielsweise durch eine Verstiftung erfolgen, bevorzugt ist die Verbindung jedoch stoffschlüssig. Die Anordnung der Grundplatte 4 mit den Widerlagern 6a, 6b ist sehr rigide ausgelegt und muss nicht einstellbar sein, d.h. die Widerlager 6a, 6b können unlösbar auf der Grundplatte 4 angeordnet sein.

In dem Raum zwischen den Widerlagern 6a, 6b sind Lagerblöcke 8a, 8b angeordnet. Die Lagerblöcke 8a, 8b sind dabei insbesondere separate Bauteile und austauschbar bzw. relativ zu Grundplatte 4 und Widerlagern 6a, 6b verschiebbar.

An den Lagerblöcken 6a, 6b sind Auflager 10a, 10b angeordnet, welche eine zylindersegmentförmige Außenkontur, insbesondere in Form von drehbar gelagerten Rollen aufweisen. Die Auflager 10a, 10b bilden insbesondere zwei Kontaktlinien bzw. Kontaktpunkte, auf welchen eine Biegeprobe 12, welche insbesondere eine Plättchen-, Band- oder Blechform aufweist, aufliegt.

Die Lagerblöcke 8a, 8b liegen über relativ zur Grundplatte 4 geneigte Kontaktflächen 14a, 14b an entsprechende geneigte Kontaktflächen 16a, 16b der Widerlager 6a, 6b an. Der Winkel der Kontaktflächen 14a, 14b; 16a, 16b ist in Fig. 1 mit $\alpha$ bezeichnet.

Insbesondere ist die Vorrichtung 2 bezüglich einer Spiegelebene symmetrisch. Dafür können die Widerlager 6a, 6b und die Lagerblöcke 8a, 8b jeweils die gleiche Geometrie und den gleichen Neigungswinkel $\alpha$ aufweisen. Die Spiegelebene verläuft dann zwischen den Widerlagern 10a, 10b.

Zur Ausübung einer Kraft auf die Biegeprobe 12 ist ein Biegestempel oder Biegeschwert 18 vorgesehen. Dieser ist so angeordnet, dass eine Kraft auf die Biegeprobe 12 zwischen den Auflagern 10a, 10b ausgeübt und die Biegeprobe 12 mit einem Biegewinkel verformt werden kann.

In diesem Ausführungsbeispiel ist der Biegestempel oder Biegeschwert 18 für einen 3-Punkt-Biegeversuch ausgelegt. Ebenso kann auch ein Biegestempel oder Biegeschwert 18 mit zwei Berührungspunkten für einen 4-Punkt-Biegeversuch vorgesehen sein.

Der Abstand $\Delta$ zwischen den Auflagern 10a, 10b kann prinzipiell über verschieden bemessene Lagerblöcke 8a, 8b eingestellt werden. Zur Einstellung des Abstands $\Delta$ zwischen den Auflagern 10a, 10b können aber auch Mittel zur Positionsänderung der Lagerblöcke 8a, 8b senkrecht zur Grundplatte 4 vorgesehen sein. In diesem Ausführungsbeispiel ist ein Stempel 20 zwischen den Widerlagern 6a, 6b auf der Grundplatte 4 angeordnet. Der Stempel 20 ist insbesondere ein separates Bauteil und kann entfernt oder gegen einen anderen Stempel 20 mit anderer Höhe ausgetauscht werden. Über eine Positionsänderung der Lagerblöcke 8a, 8b senkrecht zur Grundplatte 4 durch den Stempel 20 wird auch über die geneigten Kontaktflächen 14a, 14b; 16a, 16b die Position der Lagerblöcke 8a, 8b parallel zur Grundplatte 4 und damit der Abstand $\Delta$ zwischen den Auflagern 10a, 10b geändert. Durch eine bestimmte Höhe des Stempels 20 kann damit in Abhängigkeit des Winkels $\alpha$ der Abstand $\Delta$ eingestellt werden.

Der Winkel $\alpha$ beträgt bevorzugt zwischen 70° und 90°, insbesondere zwischen 75° und 85°. Ein Winkel $\alpha$ von 80,54° ergibt beispielsweise eine Übersetzung von etwa 4:1 zwischen der Positionierung der Lagerblöcke 8a, 8b senkrecht und parallel zur Grundplatte 4. Ein Stempel 20 mit einer Höhe von 4 mm ergibt dann beispielsweise eine Erhöhung des Abstands $\Delta$ um 1 mm.

Weiter können Einschübe 22 vorgesehen sein, welche zwischen die Grundplatte 4 und den Lagerblöcken 6a, 6b zur Positionsänderung der Lagerblöcke 6a, 6b senkrecht zur Grundplatte 4 eingeschoben werden können. Die Einschübe 22 können zwischen Stempel 20 und Grundplatte 4, wie in Fig. 1 gezeigt, und/oder zwischen Stempel 20 und Lagerblöcken 8a, 8b angeordnet werden. Insbesondere steht eine Vielzahl von Einschüben 22 zur Verfügung, insbesondere auch mit verschiedenen Abmessungen, damit die Positionsänderung der Lagerblöcke 6a, 6b senkrecht zur Grundplatte 4 bzw. der Abstand Δ der Auflager 10a, 10b präzise und flexibel eingestellt werden kann. Insbesondere weisen die Einschübe 22 zumindest teilweise parallele Flächen auf. Bevorzugt werden die Einschübe 22 durch blechförmige Lagen gebildet.

Die Vorrichtung 2 kann weiter ein Vorspannungselement, beispielsweise in Form eines Federelements 24, zwischen den Lagerblöcken aufweisen. Dadurch wird eine Vorspannung auf die Lagerblöcke 8a, 8b ausgeübt, welche die Lagerblöcke 8a, 8b mit den Kontaktflächen 14a, 14b; 16a, 16b gegen die Widerlager 6a, 6b drückt. Damit wird die Einstellung des Abstands Δ der Auflager 10a, 10b besonders genau, da ein Spiel zwischen Lagerblöcken 8a, 8b und Widerlagern 6a, 6b vermieden wird.

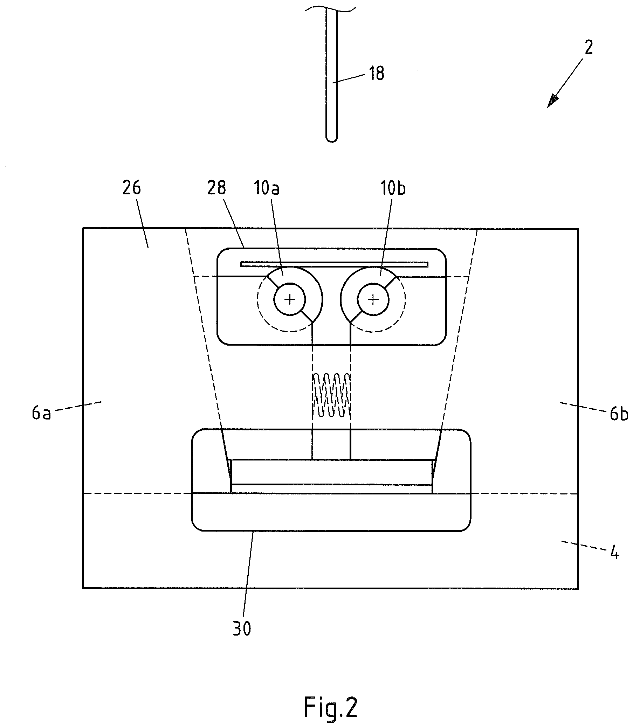

Fig. 2 zeigt ein zweites Ausführungsbeispiel der erfindungsgemäßen Vorrichtung 2 in einer schematischen Seitenansicht. Hierbei gleicht der Aufbau der Vorrichtung 2 dem Aufbau des in Fig. 1 gezeigten Ausführungsbeispiels, wobei in Fig. 2 manche Bezugszeichen der Übersichtlichkeit halber ausgelassen wurden. Die in Fig. 2 gezeigte Vorrichtung 2 weist Verbindungsmittel in Form einer Verbindungsplatte 26 auf, welche die Widerlager 6a, 6b zumindest teilweise in Richtung der Verbindungslinie der Auflager 10a, 10b verbindet und die Widerlager 6a, 6b zumindest teilweise in Richtung der Verbindungslinie der Auflager 10a, 10b mit der Grundplatte 4 verbindet. Die Verbindungsplatte 26 befindet sich dabei seitlich der Lagerblöcke 8a, 8b, so dass die Vorrichtung 2 für die Verwendung des Biegestempels oder Biegeschwerts 18 nach oben offen ist. Insbesondere kann auf der anderen Seite eine weitere Verbindungsplatte (nicht gezeigt) angeordnet sein. Durch solche Verbindungsmittel 26 kann die Stabilität und Rigidität bzw. Biegesteifigkeit der Anordnung von Widerlagern 6a, 6b und Grundplatte 4 weiter verbessert werden, was die Messgenauigkeit insbesondere bei hohen Kräften beim Biegeversuch erhöht.

Beispielsweise können die Verbindungsmittel 26 Öffnungen 28, 30 aufweisen. Die Öffnung 28 kann zum Beobachten der Biegeprobe dienen und die Öffnung 30 kann zum Wechseln der Einschübe 22 oder des Stempels 20 vorgesehen sein.

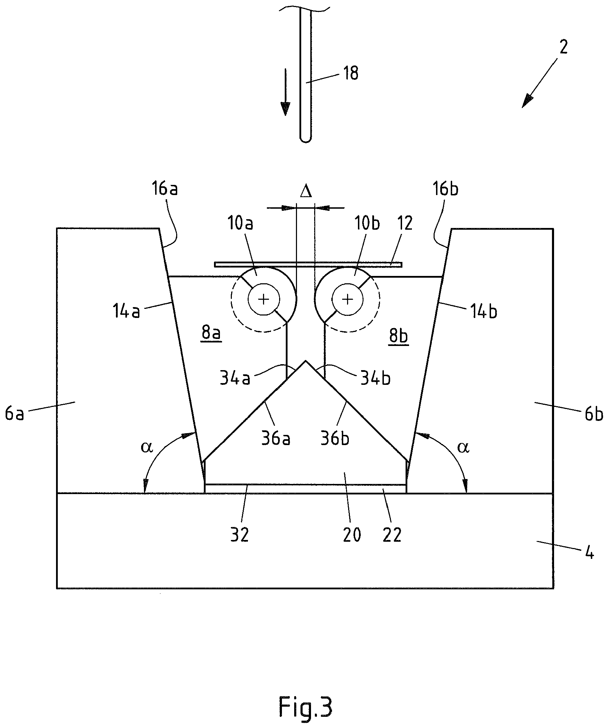

Fig. 3 zeigt ein drittes Ausführungsbeispiel der erfindungsgemäßen Vorrichtung 2 in einer schematischen Ansicht. Hierbei ist ein Stempel 20 vorgesehen, welcher zwei gegen eine Grundfläche 32 geneigte Stützflächen 34a, 34b aufweist und es sind an die Stützflächen 34a, 34b angepasste Grundflächen 36a, 36b an den Lagerblöcken 8a, 8b vorgesehen. Durch die geneigten Stützflächen 34a, 34b und Grundflächen 36a, 36b werden die Lagerblöcke 8a, 8b aufgrund ihres Gewichts gegen die Kontaktflächen 16a, 16b gedrückt und erhalten somit eine Vorspannung. Der Abstand Δ zwischen den Auflagern 10a, 10b kann somit besonders präzise eingestellt werden.

Eine Einstellung des Abstands Δ kann wiederum über eine Positionsänderung der Lagerblöcke 8a, 8b bewirkt werden, insbesondere durch die Verwendung von Einschüben 22. Die Einschübe 22 können zwischen Stempel 20 und Grundplatte 4, wie in Fig. 3 gezeigt, und/oder zwischen Stempel 20 und Lagerblöcken 8a, 8b angeordnet werden.

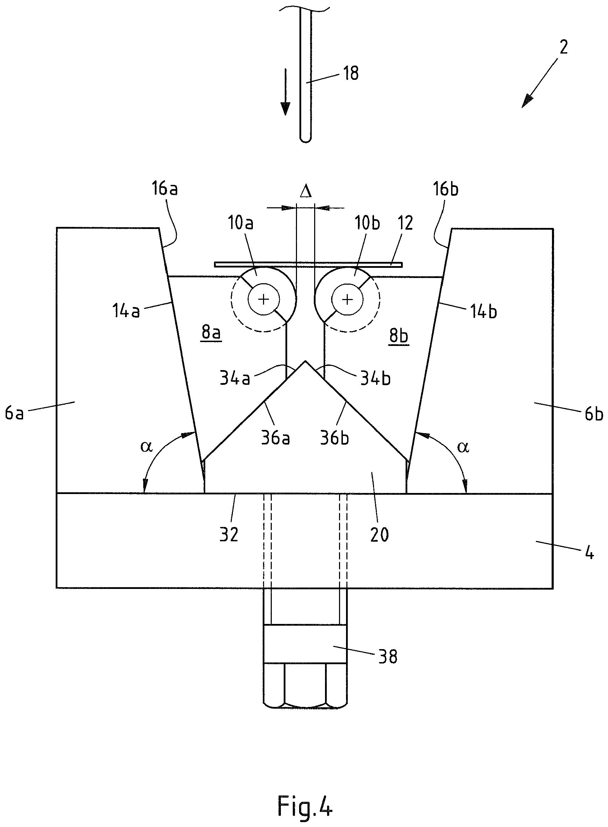

Fig. 4 zeigt ein viertes Ausführungsbeispiel der erfindungsgemäßen Vorrichtung 2 in einer schematischen Ansicht, wobei als Mittel zur Positionsänderung eine Spindel 38 vorgesehen ist, welche zwischen Stempel 20 und Grundplatte 4 angeordnet ist. Über die Spindel 38 ist ebenfalls eine Einstellung des Abstands Δ über eine Positionsänderung der Lagerblöcke 8a, 8b möglich. Die Position der Lagerblöcke 8a, 8b senkrecht zur Grundplatte 4 kann mit der Spindel 38 stufenlos eingestellt werden. Die Spindel 38 ist näherungsweise senkrecht zur Grundplatte angeordnet. Damit wirken während eines Biegeversuchs nur geringe seitliche Kräfte auf die Spindel 38.

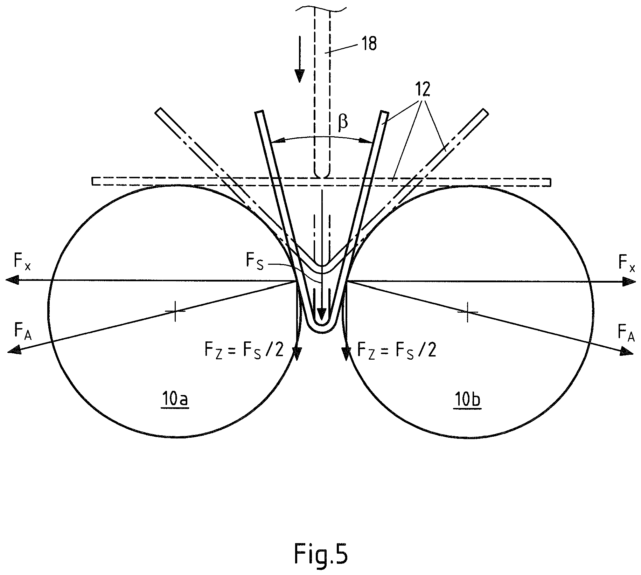

Fig. 5 zeigt schließlich eine schematische Detailansicht der Auflager 10a, 10b während eines Biegeversuchs zur Verdeutlichung der Kräfteverhältnisse. Eine Biegeprobe 12, welche hier als Plättchen gezeigt ist, wird zunächst auf die Auflager 10a, 10b gelegt. Der Biegestempel oder das Biegeschwert 18 wird anschließend abgesenkt, bis dieser die Oberfläche der Biegeprobe 12 berührt. Dann wird über den Biegestempel oder das Biegeschwert 18 eine Kraft $F_S$ in Pfeilrichtung auf die Biegeprobe 12 zwischen den Auflagern 10a, 10b ausgeübt und die Biegeprobe 12 zu einem Öffnungswinkel β verformt. In Fig. 4 ist eine kontinuierliche Verformung über die gestrichelten, strichgepunkteten sowie durchgezogenen Linien für Biegeprobe 12 und Biegestempel oder Biegeschwert 18 angedeutet. Beispielsweise erfolgt dabei eine kontinuierliche Messung des Öffnungswinkels β, insbesondere über die Position des Biegestempels oder des Biegeschwerts 18, und der Kraft $F_S$ des Biegestempels oder des Biegeschwerts 18.

Für die Darstellung über die durchgezogenen Linien für Biegeprobe 12 und Biegestempel oder Biegeschwert 18 ist auch die auf die Auflager 10a, 10b wirkende Kraft $F_A$ dargestellt. Diese entsteht durch das Beharrungsvermögen der Biegeprobe 12 gegen die Verformung durch die Kraft des Biegestempels oder des Biegeschwerts $F_S$. Problematisch für bisherige Messvorrichtungen war nun, dass die in Richtung der Verbindungslinie der Auflager wirkende Komponente $F_x$ mit abnehmenden Öffnungswinkel β, also zunehmenden Biegewinkel, sehr groß werden kann. $F_x$ berechnet sich durch

$$F_x = 0{,}5 * F_S * \cot(\beta/2).$$

$F_x$ strebt daher für kleine Winkel β sogar gegen unendlich. Die Auflager 10a, 10b müssen somit in der Lage sein, entsprechend große Kräfte aufzunehmen, ohne den für die Messung entscheidenden Abstand Δ wesentlich zu verändern.

Dies gelingt über die erfindungsgemäße Vorrichtung bzw. das erfindungsgemäße Verfahren. Insbesondere über die geneigten Kontaktflächen 14a, 14b; 16a, 16b kann die Kraft $F_A$ vorteilhaft aufgenommen werden, ohne dass große Hebelwirkungen über die Lagerblöcke 8a, 8b erzeugt werden.

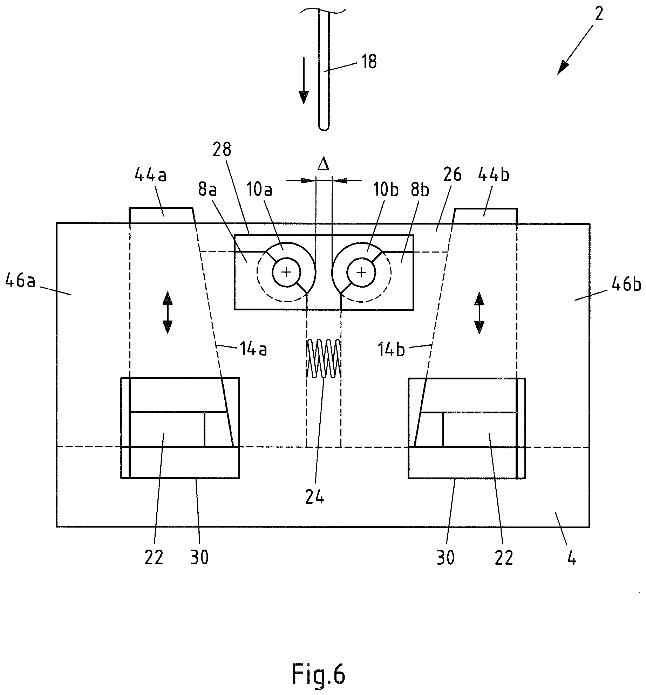

Ein Ausführungsbeispiel der erfindungsgemäßen Vorrichtung mit Mitteln zur Positionsänderung der Lagerblöcke 8a, 8b parallel zur Grundplatte zeigt Fig. 6 in einer schematischen Ansicht. Die Widerlager in dem in Fig. 6 dargestellten Ausführungsbeispiel weisen jeweils einen mit der Grundplatte verbundenen Teil 46a, 46b sowie jeweils eine Stützplatte 44a, 44b auf. Die Stützplatten 44a, 44b weisen jeweils geneigte Kontaktflächen 48a, 48b zum jeweiligen Lagerblock 8a, 8b auf. Durch Austausch der eine keilförmige Querschnittsfläche aufweisenden Stützplatten 44a, 44b kann der Abstand der Lagerblöcke 8a, 8b verändert werden. Zusätzlich können durch Einschübe 22 die Stützplatten 44a, 44b in ihrer Position senkrecht zur Grundplatte 4 geändert werden, sodass sich der Abstand der Lagerblöcke 8a, 8b auch durch Austausch der Einschübe 22 verändern lässt.

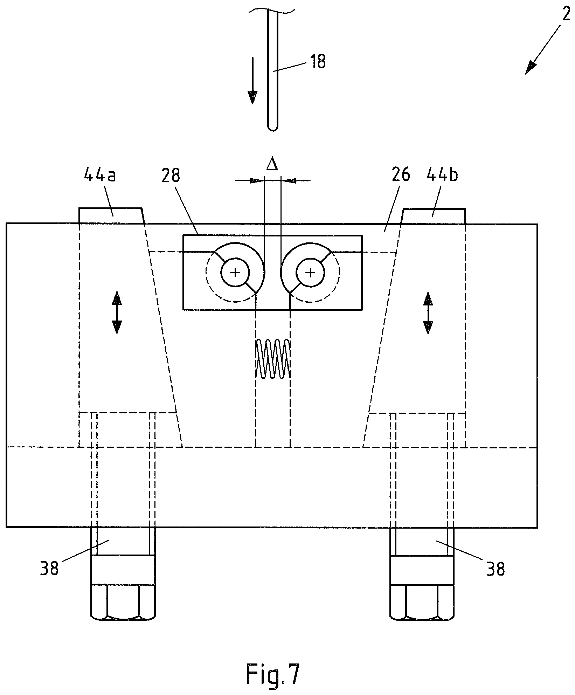

Fig. 7 zeigt in einer schematischen Ansicht ein weiteres Ausführungsbeispiel der erfindungsgemäßen Vorrichtung, bei welcher anstelle der Einschübe 22 Spindeln 38 vorgesehen sind, welche die Stützplatten 44a, 44b in ihrer Position senkrecht zur Grundplatte 4 verändern können. Durch die geneigte Kontaktfläche der Stützplatte zum Lagerblock wird nur ein geringer Teil der Biegekräfte auf die Spindeln 38 übertragen, sodass die Spindeln 38 während des Biegeversuchs die Position der Stützplatten 44a, 44b, beispielsweise durch Verwendung einer nicht dargestellten Arretierung der Spindel, exakt einhalten kann.

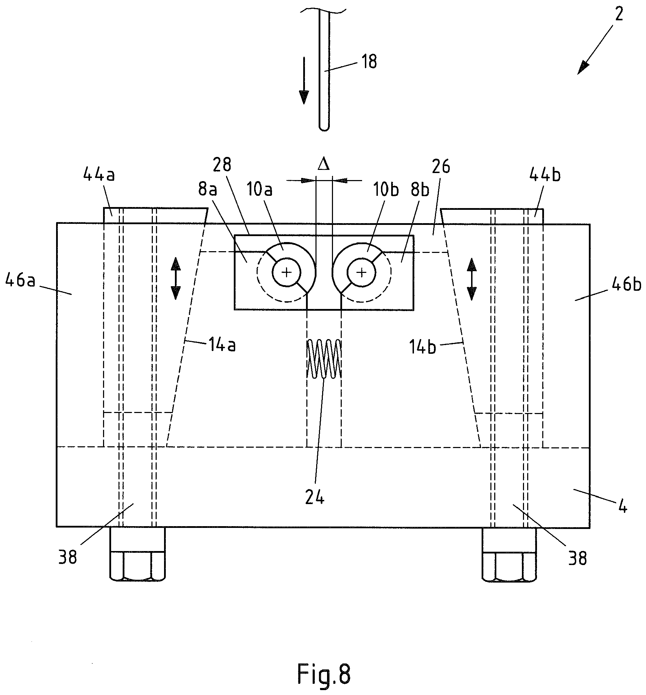

Die geneigten Kontaktflächen zwischen den Lagerblöcken 8a, 8b und den Widerlagern bzw. den Stützplatten 44a, 44b können derart verlaufen, dass in Richtung des Biegestempels die Stützplatten 44a, 44b einen größeren Abstand zueinander einnehmen oder umgekehrt, dass die Stützplatten 44a, 44b in Richtung des Biegestempels einen kleineren Abstand zueinander aufweisen. Fig. 8 zeigt ein Ausführungsbeispiel, bei welchem entgegen dem Ausführungsbeispiel in Fig. 7 die geneigte Kontaktfläche 14a, 14b in Richtung des Biegestempels 18 zu einem verringerten Abstand der Stützplatten 44a, 44b zueinander führt. Durch die in Fig. 8 dargestellten geneigten Kontaktflächen 14a, 14b zwischen den Lagerblöcken 8a, 8b werden die Spindeln 38 während des Biegeversuchs im Gegensatz zum Ausführungsbeispiel in Fig. 7 auf Zug belastet. Eine Arretierung der Spindeln 38 ist hierbei ebenfalls möglich, beispielsweise über ein Kraftschlussmittel.

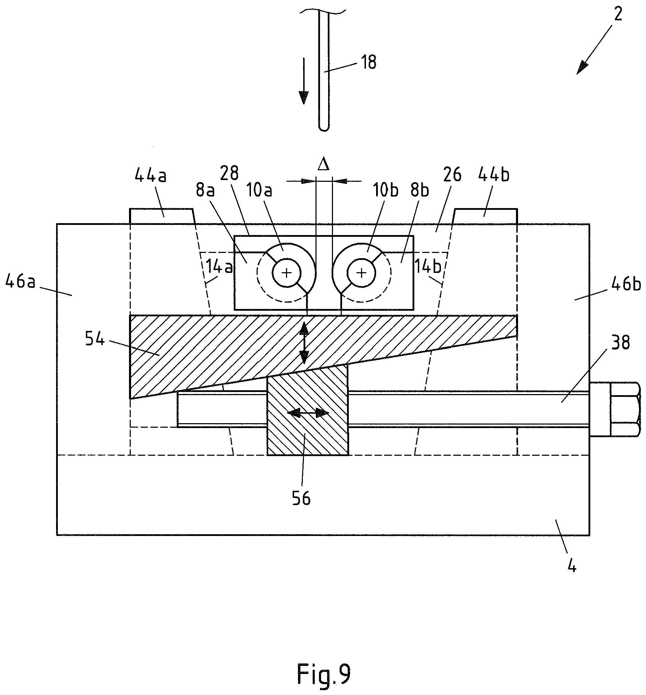

Fig. 9 zeigt schließlich ein nächstes Ausführungsbeispiel, bei welchem als Mittel zur Positionsänderung der Stützplatten senkrecht zur Grundplatte mindestens ein horizontal verschiebbares Keilelement 56 vorgesehen ist, welches mit einem eine geneigte Kontaktfläche zum Keilelement 56 aufweisenden Schubelement 54 im Eingriff steht, sodass durch Verschieben des mindestens einen Keilelementes 56 die Position des Schubelementes 54 senkrecht zur Grundplatte 4 geändert werden kann, wobei das mindestens eine Schubelement 54 im Eingriff mit den Stützplatten 44a, 44b steht, derart dass bei Positionsänderung des Schubelements 54 die Position der Stützplatten 44a, 44b senkrecht zur Grundplatte veränderbar ist. Die Bewegung des Keilelementes 56 erfolgt im vorliegenden Ausführungsbeispiel über eine Spindel 38, welche über die im Eingriff stehenden schrägen Kontaktflächen des Keilelementes 56 und des Schubelementes 54 zu einer Positionsänderung des mindestens einen Schubelementes 54 senkrecht zur Grundplatte führt. Durch die schrägen Kontaktflächen und die Zwangsführung des Schubelements 54 durch das Keilelement kann nicht nur eine besonders einfache Möglichkeit gegeben werden, die Position der Stützplatten 44a, 44b unter Verwendung des mindestens einen Schubelements 54 zu verändern. Es besteht auch die Möglichkeit, aufgrund der schrägen Kontaktflächen von Keilelement 56 und Schubelement 54 eine sehr genaue Höhenverstellung, beispielsweise im Mikrometerbereich, des Schubelementes 54 aufgrund der Untersetzung der horizontalen Bewegung des Keilelementes 56 in eine vertikale Bewegung des Schubelementes 54 zu erzielen.

Die Spindel 38 kann, hier nicht dargestellt, eine Anzeige umfassen, welche den Abstand der Auflager 10a, 10b anzeigt und somit dem Benutzer unmittelbar eine Information zum eingestellten Auflagerabstand gibt. Durch die Verwendung der schrägen Kontaktflächen zwischen Keilelement 56 und Schubelement 54 sowie über die Steigung des Gewindes der Spindel 38 kann die Position der Lagerblöcke und damit der Auflager 10a, 10b sehr genau eingestellt werden.

In allen drei dargestellten Ausführungsbeispielen der Fig. 6 bis 9 sind die mit der Grundplatte verbundenen Teile 46a, 46b des Widerlagers beispielsweise mit der Grundplatte über einen Formschluss und/oder einen Kraftschluss oder aber auch stoffschlüssig verbunden. Für einen Formschluss kommt beispielsweise eine Verstiftung der Widerlagerteile 46a, 46b infrage. Ein Kraftschluss kann beispielsweise über eine Verschraubung zu einer kraft- und formschlüssigen Verbindung mit der Grundplatte 4 erfolgen. Eine stoffschlüssige Verbindung oder auch eine einstückige Ausbildung der Grundplatte mit Widerlagerteilen 46a, 46b ist jedoch auch denkbar. Gleiches gilt selbstverständlich auch für die Verbindung der Widerlager 6a und 6b der Fig. 1 bis 4.

**Patentansprüche**

1. Vorrichtung zur Durchführung eines Biegeversuchs

   - mit einer Grundplatte (4),

- mit über die Grundplatte (4) verbundenen Widerlagern (6a, 6b),
- mit Lagerblöcken (8a, 8b), welche jeweils ein Auflager (10a, 10b) zum Auflegen einer Biegeprobe (12) aufweisen und
- mit einem Biegestempel oder einem Biegeschwert (18) zur Ausübung einer Kraft auf eine Biegeprobe (12),
**dadurch gekennzeichnet, dass**
- die Widerlager (6a, 6b) und die Lagerblöcke (8a, 8b) über zur Grundplatte (4) geneigte Kontaktflächen (14a, 14b; 16a, 16b) aneinander anliegen.

2. Vorrichtung nach Anspruch 1,
**dadurch gekennzeichnet, dass**
Mittel zur Positionsänderung (20, 22) der Lagerblöcke (8a, 8b) senkrecht und/oder parallel zur Grundplatte (4) vorgesehen sind, wobei mit der Positionsänderung über die geneigten Kontaktflächen (14a, 14b; 16a, 16b) eine Änderung des Abstands der Auflager (10a, 10b) bewirkt werden kann.

3. Vorrichtung nach Anspruch 1 oder 2,
**dadurch gekennzeichnet, dass**
zwischen den Widerlagern (6a, 6b) ein Stempel (20) vorgesehen ist, auf welchem die Lagerblöcke (8a, 8b) aufliegen, derart dass die Lagerblöcke (8a, 8b) über den Stempel (20) senkrecht zur Grundplatte in ihrer Position geändert werden können.

4. Vorrichtung nach Anspruch 3,
**dadurch gekennzeichnet, dass**

- der Stempel (20) zwei gegen eine Grundfläche (32) geneigte Stützflächen (34a, 34b) aufweist und
- an die Stützflächen (34a, 34b) angepasste Grundflächen (36a, 36b) an den Lagerblöcken (8a, 8b) vorgesehen sind.

5. Vorrichtung nach einem der Ansprüche 1 oder 2,
**dadurch gekennzeichnet, dass**
als Mittel zur senkrechten Positionsänderung der Lagerblöcke zur Grundplatte wechselbare Einschübe (22) vorgesehen sind, welche zwischen der Grundplatte (4) und den Lagerblöcken (8a, 8b), insbesondere zwischen Stempel (20) und Grundplatte (4) und/oder zwischen Stempel (20) und Lagerblöcken (8a, 8b) angeordnet werden können.

6. Vorrichtung nach einem der Ansprüche 1 oder 2,
**dadurch gekennzeichnet, dass**
als Mittel zur senkrechten Positionsänderung der Lagerblöcke zur Grundplatte eine Spindel (38) vorgesehen ist, welche zwischen der Grundplatte (4) und den Lagerblöcken (8a, 8b), insbesondere zwischen Stempel (20) und Grundplatte (4) und/oder zwischen Stempel (20) und Lagerblöcken (8a, 8b) angeordnet ist.

7. Vorrichtung nach Anspruch 1 bis 6,
**dadurch gekennzeichnet, dass**
jedes Widerlager (6a, 6b) jeweils einen mit der Grundplatte verbundenen Teil (46a, 46b) und mindestens eine Stützplatte (44a, 44b) aufweist, wobei die Stützplatte (44a, 44b) die geneigte Kontaktfläche zum jeweiligen Lagerblock (8a, 8b) bereitstellt.

8. Vorrichtung nach einem der Ansprüche 1 bis 3,
**dadurch gekennzeichnet, dass**
Mittel (22, 38, 54, 56) zur Positionsänderung der Stützplatten (44a, 44b) senkrecht zur Grundplatte vorgesehen sind.

9. Vorrichtung nach einem der Ansprüche 1 bis 4,
**dadurch gekennzeichnet, dass**
als Mittel (22, 38, 54, 56) zur Positionsänderung der Stützplatten senkrecht zur Grundplatte Spindeln (38), Einschübe (22) und/oder Stempel vorgesehen sind.

10. Vorrichtung nach einem der Ansprüche 1 bis 5,
**dadurch gekennzeichnet, dass**
als Mittel zur Positionsänderung der Stützplatten senkrecht zur Grundplatte mindestens ein horizontal verschiebbares Keilelement (56) vorgesehen ist, welches mit einem eine geneigte Kontaktfläche zum Keilelement aufweisenden Schubelement (54) im Eingriff steht, so dass durch Verschieben des mindestens einen Keilelementes (56) die Position des Schubelementes (54) senkrecht zur Grundplatte (4) geändert werden kann, wobei das mindestens eine Schubelement (54) im Eingriff mit den Stützplatten (44a, 44b) steht, derart dass bei Positionsänderung des Schubelements (54) die Position der Stützplatten (44a, 44b) senkrecht zur Grundplatte (4) veränderbar ist.

11. Vorrichtung nach einem der Ansprüche 1 bis 5,
**dadurch gekennzeichnet, dass**
zum horizontalen Verschieben des Keilelementes eine Spindel vorgesehen ist.

12. Vorrichtung nach einem der Ansprüche 1 bis 6,
**dadurch gekennzeichnet, dass**
ein Vorspannungselement, insbesondere ein Federelements (24) zwischen den Lagerblöcken (8a, 8b) vorgesehen ist.

13. Vorrichtung nach einem der Ansprüche 1 bis 7,
**dadurch gekennzeichnet, dass**

- Verbindungsmittel (26) vorgesehen sind, welche die Widerlager (6a, 6b) zumindest teilweise in Richtung der Verbindungslinie der Auflager (10a, 10b) verbinden und/oder
- die Widerlager (6a, 6b) zumindest teilweise in Richtung der Verbindungslinie der Auflager (10a, 10b) mit der Grundplatte (4) verbinden.

**14.** Vorrichtung nach Anspruch 8,
**dadurch gekennzeichnet, dass**
Öffnungen (28, 30) in den Verbindungsmitteln (26) zum Beobachten der Biegeprobe (12) und/oder zum Wechseln des Stempels (20) oder der Einschübe (22) vorgesehen sind.

**15.** Verfahren zur Durchführung eines Biegeversuchs unter Verwendung einer Vorrichtung (2) nach einem der Ansprüche 1 bis 12,

- bei welchem eine Biegeprobe (12) auf die Auflager (10a, 10b) gelegt wird,
- bei welchem eine Kraft (Fs) zwischen den Auflagern (10a, 10b) auf die Biegeprobe (12) ausgeübt wird und
- optional die Kraft des Biegestempels oder des Biegeschwerts (Fs) und ein durch die Kraft erzeugter Biegewinkel der Biegeprobe (12) gemessen werden.

**Claims**

**1.** Device for performing a bending test

- having a base plate (4),
- having counter bearings (6a, 6b) connected via the base plate (4)
- having bearing blocks (8a, 8b), which in each case comprise a support (10a, 10b) for applying a bending sample (12) and
- having a bending punch or a bending rail (18) for exerting a force on a bending sample (12),
**characterised in that**
- the counter bearings (6a, 6b) and the bearing blocks (8a, 8b) abut against each other via contact surfaces (14a, 14b; 16a, 16b) inclined to the base plate (4).

**2.** Device according to Claim 1,
**characterised in that**
means for changing the position (20, 22) of the bearing blocks (8a, 8b) perpendicular and/or parallel to the base plate (4) are provided, wherein a change of the distance of the supports (10a, 10b) can be effected with the change of position via the inclined contact surfaces (14a, 14b; 16a, 16b).

**3.** Device according to Claim 1 or 2,
**characterised in that**
a punch (20) is provided between the counter bearings (6a, 6b), on which the bearing blocks (8a, 8b) rest such that the position of the bearing blocks (8a, 8b) can be changed perpendicular to the base plate via the punch (20).

**4.** Device according to Claim 3,
**characterised in that**

- the punch (20) comprises two support surfaces (34a, 34b) inclined towards a base surface (32) and
- base surfaces (36a, 36b) adapted to the support surfaces (34a, 34b) are provided on the bearing blocks (8a, 8b).

**5.** Device according to any one of Claims 1 or 2,
**characterised in that**
changeable inserts (22) are provided as the means for the perpendicular change of position of the bearing blocks to the base plate, which can be arranged between the base plate (4) and the bearing blocks (8a, 8b), in particular between punch (20) and base plate (4) and/or between punch (20) and bearing blocks (8a, 8b).

**6.** Device according to any one of Claims 1 or 2,
**characterised in that**
a spindle (38) is provided as the means for the perpendicular change of position of the bearing blocks to the base plate, which is arranged between the base plate (4) and the bearing blocks (8a, 8b), in particular between punch (20) and base plate (4) and/or between punch (20) and bearing blocks (8a, 8b).

**7.** Device according to Claim 1 to 6,
**characterised in that**
each counter bearing (6a, 6b) in each case comprises a part (46a, 46b) connected to the base plate and at least one support plate (44a, 44b), wherein the support plate (44a, 44b) provides the inclined contact surface to the respective bearing block (8a, 8b).

**8.** Device according to any one of Claims 1 to 3,
**characterised in that**
means (22, 38, 54, 56) are provided for the change of position of the support plates (44a, 44b) perpendicular to the base plate.

**9.** Device according to any one of Claims 1 to 4,
**characterised in that**
spindles (38), inserts (22) and/or punches are provided as the means (22, 38, 54, 56) for the change of position of the support plates perpendicular to the base plate.

**10.** Device according to any one of Claims 1 to 5,
**characterised in that**
at least one horizontally displaceable wedge element (56) is provided as the means for the change of position of the support plates perpendicular to the base plate, said wedge element (56) is engaged with a sliding element (54) comprising an inclined contact surface to the wedge element such that the position of the sliding element (54) can be changed perpendicular to the base plate (4) by displacing the at least one wedge element (56), wherein the at least one sliding element (54) is engaged with the support plates (44a, 44b) in such a way that the position of the support plates (44a, 44b) perpendicular to the base plate (4) is changeable when the position of the sliding element (54) is changed.

11. Device according to any one of Claims 1 to 5, **characterised in that** a spindle is provided for horizontally displacing the wedge element.

12. Device according to any one of Claims 1 to 6, **characterised in that** a pretensioning element, in particular a spring element (24) is provided between the bearing blocks (8a, 8b).

13. Device according to any one of Claims 1 to 7, **characterised in that**

    - connection means (26) are provided which connect the counter bearings (6a, 6b) at least partially in the direction of the connection line of the supports (10a, 10b) and/or
    - connect the counter bearings (6a, 6b) at least partially in the direction of the connection line of the supports (10a, 10b) to the base plate (4).

14. Device according to Claim 8, **characterised in that** openings (28, 30) are provided in the connection means (26) for observing the bending sample (12) and/or for changing the punch (20) or the inserts (22).

15. Method for performing a bending test using a device (2) according to any one of Claims 1 to 12,

    - in which a bending sample (12) is applied on the supports (10a, 10b),
    - in which a force (Fs) is exerted between the supports (10a, 10b) on the bending sample (12) and
    - optionally the force of the bending punch or of the bending rail (Fs) and a bending angle of the bending sample (12) produced by the force are measured.

**Revendications**

1. Dispositif pour effectuer un essai de pliage

    - avec une plaque de base (4),
    - avec des culées (6a, 6b) reliées par la plaque de base (4),
    - avec des blocs de palier (8a, 8b) qui présentent chacun un support (10a, 10b) pour supporter un échantillon de pliage (12) et
    - avec un poinçon de pliage ou une épée de pliage (18) pour exercer une force sur un échantillon de pliage (12),
    **caractérisé en ce que**
    - les culées (6a, 6b) et les blocs de palier (8a, 8b) s'appuient l'un contre l'autre par des surfaces de contact (14a, 14b ; 16a, 16b) inclinées par rapport à la plaque de base (4).

2. Dispositif selon la revendication 1, **caractérisé en ce que** des moyens sont prévus pour modifier la position (20, 22) des blocs de palier (8a, 8b) perpendiculairement et/ou parallèlement à la plaque de base (4), le changement de position via les surfaces de contact inclinées (14a, 14b ; 16a, 16b) pouvant entraîner une modification de la distance entre les supports (10a, 10b).

3. Dispositif selon la revendication 1 ou 2, **caractérisé en ce qu'** un poinçon (20) est prévu entre les culées (6a, 6b), sur lesquelles reposent les blocs de palier (8a, 8b), de telle sorte que la position des blocs de palier (8a, 8b) peut être modifiée perpendiculairement à la plaque de base par le poinçon (20).

4. Dispositif selon la revendication 3, **caractérisé en ce que**

    - le poinçon (20) a deux surfaces de support (34a, 34b) inclinées contre une surface de base (32), et
    - des surfaces de base (36a, 36b) adaptées aux surfaces de support (34a, 34b) sont prévues sur les blocs de palier (8a, 8b).

5. Dispositif selon l'une des revendications 1 ou 2, **caractérisé en ce que** des inserts interchangeables (22) pouvant être disposés entre la plaque de base (4) et les blocs de palier (8a, 8b), en particulier entre le poinçon (20) et la plaque de base (4) et/ou entre le poinçon (20) et les blocs de palier (8a, 8b), sont prévus comme moyens pour modifier la position verticale des blocs de palier par rapport à la plaque de base.

6. Dispositif selon l'une des revendications 1 ou 2,

**caractérisé en ce qu'**
une broche (38), qui est disposée entre la plaque de base (4) et les blocs de palier (8a, 8b), en particulier entre le poinçon (20) et la plaque de base (4) et/ou entre le poinçon (20) et les blocs de palier (8a, 8b), est prévue comme moyen pour modifier la position verticale des blocs de palier par rapport à la plaque de base.

**7.** Dispositif selon les revendications 1 à 6, **caractérisé en ce que**
chaque culée (6a, 6b) présente une partie respective (46a, 46b) reliée à la plaque de base et au moins une plaque de support (44a, 44b), la plaque de support (44a, 44b) fournissant la surface de contact inclinée au bloc de palier respectif (8a, 8b).

**8.** Dispositif selon l'une des revendications 1 à 3, **caractérisé en ce que**
des moyens (22, 38, 54, 56) sont prévus pour modifier la position des plaques de support (44a, 44b) perpendiculairement à la plaque de base.

**9.** Dispositif selon l'une des revendications 1 à 4, **caractérisé en ce que**
des broches (38), des inserts (22) et/ou des poinçons sont prévus comme moyens (22, 38, 54, 56) pour modifier la position des plaques de support perpendiculairement à la plaque de base.

**10.** Dispositif selon l'une des revendications 1 à 5, **caractérisé en ce qu'**
au moins un élément de coin (56) déplaçable horizontalement, qui est en prise avec un élément de poussée (54) ayant une surface de contact inclinée avec l'élément de coin, est prévu comme moyen pour modifier la position des plaques de support perpendiculairement à la plaque de base, de sorte que la position de l'élément de poussée (54) peut être modifiée perpendiculairement à la plaque de base (4) en déplaçant l'au moins un élément de coin (56), l'au moins un élément de poussée (54) étant en prise avec les plaques de support (44a, 44b) de sorte que, lorsque la position de l'élément de poussée (54) change, la position des plaques de support (44a, 44b) puisse être modifiée perpendiculairement à la plaque de base (4).

**11.** Dispositif selon l'une des revendications 1 à 5, **caractérisé en ce qu'**
une broche est prévue pour déplacer l'élément de coin horizontalement.

**12.** Dispositif selon l'une des revendications 1 à 6, **caractérisé en ce qu'**
un élément de précontrainte, en particulier un élément à ressort (24), est prévu entre les blocs de palier (8a, 8b).

**13.** Dispositif selon l'une des revendications 1 à 7, **caractérisé en ce que**

- des moyens de liaison (26) sont prévus qui relient les culées (6a, 6b) au moins partiellement dans la direction de la ligne de liaison des supports (10a, 10b) et/ou
- relier les culées (6a, 6b) à la plaque de base (4) au moins partiellement dans la direction de la ligne de liaison des supports (10a, 10b).

**14.** Dispositif selon la revendication 8, **caractérisé en ce que**
des ouvertures (28, 30) sont prévues dans les moyens de liaison (26) pour observer l'échantillon de pliage (12) et/ou pour changer le poinçon (20) ou les inserts (22).

**15.** La procédure d'exécution d'un essai de pliage en utilisant un dispositif (2) selon l'une des revendications 1 à 12,

- dans laquelle un échantillon de pliage (12) est placé sur les supports (10a, 10b),
- dans laquelle une force ($F_S$) entre les supports (10a, 10b) est exercée sur l'échantillon de pliage (12), et
- la force du poinçon de pliage ou de l'épée de pliage ($F_S$) et un angle de pliage de l'éprouvette de pliage (12) généré par la force peuvent être mesurés au choix.

Fig.1

18

2

26   28   10a   10b

6a

6b

30

4

Fig.2

Fig.3

Fig.4

Fig.5

Fig.6

Fig.7

Fig.8

Fig.9

**EP 3 237 877 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3101422 A1
- FR 2735235 A1

22